# EUROPÄISCHE PATENTANMELDUNG

(11) **EP 4 353 471 A1**
(43) Veröffentlichungstag der Anmeldung: **17.04.2024**
(21) Anmeldenummer: 23202756.5
(22) Anmeldetag: 10.10.2023
(51) Int. Cl.: B32B 5/02, B32B 5/26, B32B 7/12, B32B 15/14, B32B 15/18, B32B 15/20, H01M 50/124

(54) **BRANDSCHUTZVORRICHTUNG MIT VERBUNDSYSTEM, VERBUNDSYSTEM UND BATTERIE-PACK MIT BRANDSCHUTZVORRICHTUNG**

(30) Priorität: 11.10.2022 EP 22200807
(71) Anmelder: Cuylits Holding GmbH, 49593 Bersenbrück (DE)
(72) Erfinder: Winter, Florian, 49082 Osnabrück (DE); Cuylits, Diederik, 49593 Bersenbrück (DE)
(74) Vertreter: Gille Hrabal Partnerschaftsgesellschaft mbB Patentanwälte

(57) **Zusammenfassung**

Beschrieben wird ein Verbundsystem, umfassend mindestens eine Trägerschicht; mindestens eine als Brandschutzvlies ausgebildete Schicht; und mindestens einen Bestandteil zur Abschirmung elektrischer, magnetischer und/oder elektromagnetischer Strahlung. Des Weiteren wird ein verfahren zu dessen Herstellung dessen Verwendung beschrieben.

## Beschreibung

Die vorliegende Erfindung betrifft ein Verbundsystem, welches zum gleichzeitigen Brandschutz und elektromagnetischen Abschirmung verwendet werden kann. Weiterer Gegenstand der vorliegenden Erfindung ist ein Verfahren zur Herstellung dieses erfindungsgemäßen Verbundsystems sowie die Verwendung des erfindungsgemäßen Verbundsystems zum gleichzeitigen Brandschutz und EMI-Abschirmung, insbesondere im Bereich von Batterien.

In der Automobilindustrie gibt es derzeit einen Trend, Verbrennungsmotoren durch Elektromotoren oder eine Kombination aus Elektromotor und Verbrennungsmotor zu ersetzen und damit die Umweltauswirkungen von Automobilen durch die Reduzierung (Hybride) oder die vollständige Eliminierung (Elektrofahrzeuge) von Fahrzeugemissionen herabzusetzen. Dieser Wechsel in der Antriebstechnik ist jedoch nicht ohne technologische Hürden, da der Einsatz eines Elektromotors den Bedarf an kostengünstigen, wiederaufladbaren Batterien (Akkus) mit hoher Energiedichte, langer Lebensdauer und vielfältigen Einsatzbedingungen mit sich bringt. Darüber hinaus ist es unerlässlich, dass die Batterie eines Fahrzeugs weder während der Nutzung des Fahrzeugs noch während der Lagerung eine unangemessene Gesundheitsgefährdung darstellt.

Wiederaufladbare Batterien, wie Lithiumionen-Zellen, neigen eher dazu, thermisch durchzugehen ("thermal runaway") als Primärzellen. Ein thermisches Durchgehen tritt auf, wenn die interne Reaktionsgeschwindigkeit so weit ansteigt, dass mehr Wärme erzeugt wird, als der Batterie entnommen werden kann, was zu einer weiteren Erhöhung sowohl der Reaktionsgeschwindigkeit als auch der Wärmeentwicklung führt. Schließlich ist die erzeugte Wärmemenge groß genug, dass sie zur Zerstörung der Batteriezelle (z.B. durch Überdruck (Zerbersten) oder durch Ausstoß von Gasen) führt. Außerdem kann es dabei zu einer Brandentwicklung kommen.

Ein thermisches Durchgehen kann beispielsweise durch einen Kurzschluss innerhalb der Zelle, unsachgemäßen Gebrauch der Zelle, Herstellungsfehler oder extreme Außentemperaturen ausgelöst werden. Im Falle eines in einem Elektrofahrzeug verwendeten Batterie-Packs, welches mehrere Batteriezellen enthält, kann ein Autounfall Ursache dafür sein, dass gleichzeitig mehrere Zellen innerhalb des Batterie-Packs thermisch durchgehen.

Während eines thermischen Durchgehens wird eine große Menge an thermischer Energie schnell freigesetzt, wodurch die gesamte Zelle auf eine Temperatur von 850 °C oder mehr erhitzt wird. Durch die erhöhte Temperatur der thermisch durchgehenden Zelle wird die Temperatur benachbarter Zellen innerhalb des Batterie-Packs auch erhöht. Wenn sich die Temperatur der benachbarten Zellen ungehindert erhöht, können auch sie thermisch durchgehen. Dieser Kaskadeneffekt kann dazu führen, dass beim thermischen Durchgehen einer einzelnen Zelle am Ende alle Zellen im gesamten Batterie-Pack thermisch durchgehen.

Batterie-Packs weisen ein Gehäuse auf, das zum Schutz der Batteriezellen dient und Vorrichtungen enthält, die der Klimatisierung und Steuerung der Batteriezellen dienen. Durch Einsatz von speziell entwickelten Gehäusen kann die Gefahr, die durch einen Kurzschluss während der Lagerung und/oder Handhabung verursacht wird, reduziert werden.

Aus dem Stand der Technik sind Maßnahmen bekannt, wie man den Brandschutz bei Batterie-Packs, beispielsweise im Automobilbereich, verbessern kann.

Aus der US 2005/01700238 A1 ist ein Batteriegehäuse aus einem Glasfaser-verstärkten Kunststoff bekannt.

Aus der US 2012/0225331 A1 ist ein Batterie-Pack bekannt, bei dem innerhalb eines Gehäuses aus stabilem Material eine Schutzlage aus einem Glasfasermaterial, das mit einem Polymer beschichtet ist, angeordnet ist. Versagt eine Batterie, so hält das Gewebe die entstehenden Gase zurück. Das Gehäuse nimmt die entstehenden Kräfte auf.

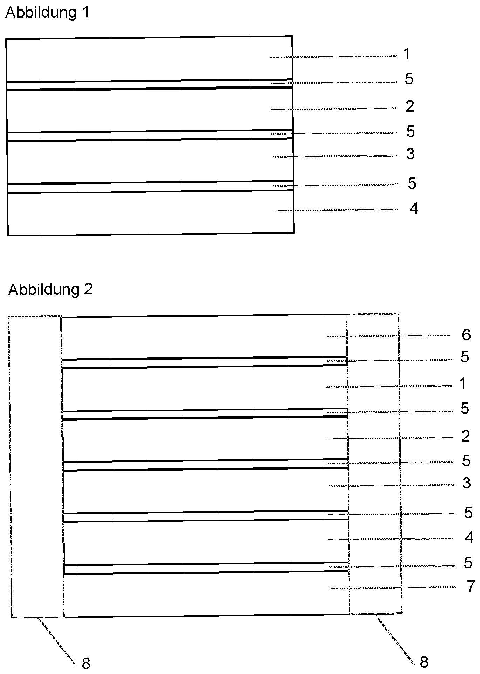

Aus der US 2011/0192564 A ist ein Verbundsystem bekannt, welches zum Schutz von Batterien verwendet wird. Das Verbundsystem ist in der Figur 1 des Standes der Technik dargestellt, wonach die obere Schicht (108) eine Klebstoffschicht darstellt, über welche das Verbundsystem mit einem elektrischen Energiespeicher, wie einer Batterie, verbunden wird. An diese Klebstoffschicht schließt sich eine Schaumstoffschicht (102) an, die wiederum mit einer Außenschicht (110) verbunden ist. Die Außenschicht kann gemäß der US 2011/0192564 A ein Glasfaservlies sein. In dieser Anordnung sind so genannte ablativ-wirkende Verbindungen gegebenenfalls in der Schaumstoffschicht (102) vorhanden. Nachteilig an diesem aus der US 2016/0192564 A bekannten Aufbau ist, dass im Fall einer Hitzewirkung die ablativ-wirkende Verbindung nur innerhalb des Verbundsystems wirken kann und damit deren Funktionsweise eingeschränkt ist. Eine unmittelbare Einwirkung der ablativ-wirkenden Verbindung auf die Batterie ist durch die zwischen Brandschutzschicht und Batterie vorgesehene Klebstoffschicht eingeschränkt.

Aus der US 2011/064997 A ist eine Batterie bekannt, welche in einem Gehäuse vorgesehen ist. Das Gehäuse wird einerseits durch eine lonomer-Schicht gebildet, die unmittelbar mit der elektrochemischen Zelle in Kontakt steht. Weiter nach außen hin verlagert (d. h. auf der der elektrochemischen Zelle gegenüberliegenden Seite der lonomer-Schicht) ist ein Glasfaservlies vorgesehen. Im Rahmen der Lehre der US 2011/064997 A kann die lonomer-Schicht einen intumeszierenden Bestandteil, wie Graphit, enthalten. Das in der Lehre der US 2011/064997 A verwendete Glasfaservlies dient somit als Trägerschicht und ist nicht unmittelbar auf das Gehäuse der elektrochemischen Zelle (Batterie) aufgezogen. Dieses aus dem Stand der Technik bekannte Verbundsystem weist den Nachteil auf, dass das verwendete Glasfaservlies als Trägermaterial keine ausreichende Steifigkeit aufweist und somit ein formstabiles Prägen des Verbundsystems nicht möglich ist. Darüber hinaus ist die Herstellung einer mit einer intumeszierenden Verbindung versehenen lonomer-Schicht aufwendig und kostenintensiv.

WO 2014/018107 A betrifft ein Laminat als Feuerbarriere zur Verwendung in der thermischen und akustischen Isolierung. In einem konkreten Ausführungsbeispiel wird ein Polyetheretherketon-Film auf einer Seite mit einem Gittergewebe und einem Wärmesiegel sowie auf der anderen Seite des Polyetheretherketon-Films mit einer Silikonklebstoffschicht, einer Glasfaserschicht und einer Feuerbarriereschicht versehen. Die Herstellung des sechsgliedrigen Laminats ist aufwendig, da insbesondere in einem separaten Verfahrensschritt auf den Silikonklebstoff zunächst ein Glasfasergewebe und anschließend eine Feuerbarriereschicht aufgetragen wird. Darüber hinaus ist das Verbundmaterial nicht für eine plastische Verformung geeignet, da keine der genannten Schichten eine ausreichende Steifigkeit aufweist.

JP H07300912 A offenbart ein Verbundsystem, welches in der Figur 2 dargestellt ist. Demnach wird auf eine untere Schicht, welche die Trägerschicht 2 darstellt und durch eine Glasfasergewebeschicht gebildet wird, eine Klebeschicht aufgetragen. Diese Klebeschicht ist mit dem Bezugszeichen 6 versehen. Daran anschließend wird eine wärmesenkende Schicht (10) auf der Klebeschicht angeordnet. Diese wärmesenkende Schicht (10) kann ein ablativ-wirkendes Mittel enthalten. Daran anschließend wird eine nichtbrennbare Schicht (4) angeordnet. Der resultierende Verbundkörper umfasst somit ein Glasfasergewebe als Trägermaterial, welches für eine plastische Verformbarkeit in der Regel keine ausreichende Steifigkeit aufweist. Darüber hinaus ist die Herstellung aufwendig und kostenintensiv.

US 5,735,098 beschreibt eine Brandschutzzusammensetzung, die eine ablativ-wirkende Verbindung und Glasfaser enthält. Die Brandschutzzusammensetzung dieses Standes der Technik umfasst jedoch weder ein Glasfaservlies, noch ein Trägermaterial, dass eine ausreichende Steifigkeit besitzt, um einen möglicherweise resultierenden Verbundkörper plastisch zu verformen.

Ein Batteriekasten, auch Batteriegehäuse genannt, ist in der Druckschrift DE 10 2010 043 899 A1 beschrieben. Bei dieser Lösung ist ein Batteriegehäuse mit einem Gehäusedeckel, der entsprechend einer Außenkontur einer Batteriezelle ausgebildet ist und einen Gehäuseboden ausgebildet, an einen haubenförmigen Gehäusedeckel angesetzt. Das Batteriegehäuse ist aus einem schwer entzündlichen Kunststoff gefertigt. Eine derartige Lösung hält einer längeren Wärmeentwicklung nicht stand.

Zusätzlich zu der Brandschutzproblematik spielen in der Zwischenzeit auch Abschirmungsfragen elektrischer, magnetischer und/oder elektromagnetischer Strahlung eine Rolle. Aus diesem Grund sind auch Lösungen bekannt, bei denen Brandschutzschichten mit elektromagnetischen Verträglichkeitsschichten (EMV- oder EMI-Schichten) kombiniert werden. Diese zusätzliche Schicht dient zur Verbesserung der elektromagnetischen Verträglichkeit (EMV) und somit vorzugsweise zur Abschirmung gegenüber anderen Antriebs- und Steuerungs-/Regelelementen des Fahrzeugs.

Aus der WO 2021/156095 A ist eine derartige Abdeckstruktur für eine Batterie eines Elektrofahrzeugs bekannt, wobei die Abdeckstruktur aus einem SMC-Grundkörper (Sheet Molding Compound) mit einer Brandschutzbeschichtung und mit einer EMV-Schicht versehen ist. Die Brandschutzbeschichtung, der SMC-Grundkörper und die EMV-Schicht werden in einem Arbeitsgang vorzugsweise mittels einer Klebepresse miteinander verklebt. Die Brandschutzbeschichtung und die EMV-Schicht sind auf gegenüberliegenden Seiten des SMC-Grundkörpers vorgesehen. Die Brandschutzbeschichtung wird in diesem Stand der Technik durch eine Glimmerplatte oder ein Mikanitformteil gebildet. Die Kernidee der WO 2021/156095 A ist es, auf einem SMC-Grundkörper eine dauerhaft klebrige Schicht zu erzeugen, wofür ein Pulverkleber verwendet wird. Daher können gemäß dieser Druckschrift nur oberhalb und unterhalb des SMC-Grundkörpers Schichten klebend angeordnet werden.

US 2021/376405 A offenbart einen thermischen Verbundwerkstoff als Wärmesperre zur Verwendung in Batteriepacks von Elektro- und Hybridfahrzeugen, wobei der Verbundwerkstoff eine poröse Kernschicht, flammhemmende Schichten, die auf beiden Seiten der porösen Kernschicht angeordnet sind, und mindestens eine Strahlungsbarriereschicht, die zwischen der porösen Kernschicht und einer flammhemmenden Schicht angeordnet ist, umfasst. In der Abbildung 6 der US 2021/376405 A ist ein Verbundwerkstoff beschrieben, der einen Aufbau aus einer ersten Flammensperrschicht, einer Strahlungsbarrierenschicht, einer oberen Seite der Strahlungsbarrierenschicht, einer porösen Trägerschicht mit oberer Seite und unterer Seite und einer zweiten Flammensperrschicht aufweist. Die poröse Trägerschicht kann als thermisch expandierbare Schicht aus einer Glasmatte, Keramikmatte oder einer anderen flammfesten Matte oder einem Filz auf Kautschukbasis mit expandierbaren Partikeln wie Vermiculit oder expandierbarem Graphit, die in der Kautschukmatrix verteilt sind, gebildet werden. Die Strahlungsbarriereschicht kann aus einer Metallfolie wie einer Aluminiumfolie, einer Kupferfolie oder Metallfolienbänder wie das 3M^{™} Aluminum Foil Shielding Tape 1170 der Firma 3M (St. Paul, Minn) gebildet sein. Andere beispielhafte Materialien können metallisches Ausgleichsmaterial oder metallbeschichtete Polymer-Verbundwerkstoffe sein. Die Verwendung von mit Aluminium beschichteten Glas- oder Basaltfasern sind in der US 2021/376405 A genauso wenig offenbart wie der weiter untenstehende konkret beschriebene Aufbau des Verbundsystems.

US 2021/074960 A offenbart ein mehrschichtiges Wärmedämmelement zur thermischen Isolierung einer Batterie, wobei das Wärmedämmelement eine erste Deckschicht, eine zweite Deckschicht und eine zwischen den Deckschichten vorgesehene Zwischenlage aufweist, die mindestens eine hitzebeständige Schicht aufweist, wobei die Schicht aus einem Nadelvlies gebildet ist und/oder wobei die Deckschichten gewebeschwach sind und das Wärmedämmelement somit als Ganzes komprimierbar und biegsam ist. In der Abbildung 1A der US 2021/074960 A ist ein Verbundwerkstoff beschrieben, der einen Aufbau aus Trägerschichten, einer Zwischenschicht mit einer Faserschicht, vorzugsweise aus einer Nadelmatte und/oder einem gebundenen Vliesstoff, einer Zwischenschicht zur Wärmeisolierung, die insbesondere aus einer Aluminiumfolie gebildet sein kann, aufweist. Die Verwendung von mit Aluminium beschichteten Glas- oder Basaltfasern sind in der US 2021/074960 A genauso wenig offenbart wie der weiter untenstehende konkret beschriebene Aufbau des Verbundsystems.

US 2022/069402 A offenbart ein Verbundsystem, umfassend eine Trägerschicht, eine Klebstoffschicht, und eine Brandschutzschicht, die mindestens eine ablative Verbindung enthält. Das Verbundsystem kann als Alternative zu einem entsprechenden beschichteten Glasfaservlies oder einem beschichteten Glasfasergewebe (als Trägerschicht) auch mindestens einer Edelstahlfolie als Barriere für die Abscheidung von Metallpartikel aus der Batterie aufweisen. Entsprechende Schichtdicken der Edelstahlfolien liegen zwischen 0,02 und 0,40 mm, vorzugsweise 0,04 und 0,30 mm, noch bevorzugter 0,05 und 0,20 mm. Die Verwendung von mit Aluminium beschichteten Glas- oder Basaltfasern sind in der 2022/069402 A genauso wenig offenbart wie der weiter untenstehende konkret beschriebene Aufbau des Verbundsystems.

US 6,399,737 eine Zusammensetzung, umfassend ein thermoplastisches Harz und etwa 1 bis etwa 30 Gew.-% eines elektromagnetischen Abschirmmittels, wobei das elektromagnetische Abschirmmittel eine metallbeschichtete Faser und eine Metallfaser umfasst und wobei die Zusammensetzung nach dem Formen eine Abschirmwirkung von mindestens etwa 10 Dezibel, gemessen gemäß ASTM D4935, aufweist.

Diese Verbundsysteme und -werkstoffe weisen den Nachteil eines nicht ausreichenden Brandschutzes, einer nicht ausreichenden elektrischen Abschirmung und einer nur eingeschränkten plastischen Verformbarkeit auf. Insbesondere sind die Verbundsysteme und -werkstoffe des Standes der Technik nachteilig, dass sie nicht gleichzeitig einen ausreichenden Brandschutz und/oder eine elektrische Abschirmung bei einer gleichzeitig guten plastischen Verformbarkeit aufweisen.

Demgegenüber liegt der Erfindung die Aufgabe zu Grunde, ein Verbundsystem zu schaffen, das zum einen den brandschutztechnischen Anforderungen und zum anderen den EMV-Anforderungen genügt, welches sich dabei mit geringem Aufwand herstellen lässt und welches plastisch verformbar ist, ohne dass es zu Schichtbrüchen oder Delaminierungen während der Verformungsprozesses kommt. Eine dreidimensionale Verformbarkeit des erfindungsgemäßen Verbundsystems ist erforderlich, damit das Verbundsystem an die dreidimensionale Form der Batterie angepasst werden kann.

Der Erfindung liegt des Weiteren die Aufgabe zu Grunde, ein Verfahren zur Herstellung einer derartigen Abdeckstruktur zu schaffen.

Diese Aufgaben wird im Hinblick auf der Verbundsystem durch die Merkmalskombination des Anspruches 1 und im Hinblick auf das Verfahren durch die Merkmalskombination des nebengeordneten Anspruches 14 gelöst.

Vorteilhafte Weiterbildungen der Erfindung sind Gegenstand der Unteransprüche.

Erfindungsgemäß ist somit zunächst ein Verbundsystem, umfassend ein Schichtsystem aus
(a) mindestens einer Trägerschicht; und
(b) mindestens einer als Brandschutzvlies ausgebildeten Schicht, vorgesehen.

Das erfindungsgemäße Verbundsystem ist dann dadurch gekennzeichnet, dass es
(c) mindestens einen Bestandteil zur Abschirmung elektrischer, magnetischer und/oder elektromagnetischer Strahlung
umfasst und der mindestens eine Bestandteil (c) entweder durch eine außerhalb der Schichten (a) und (b) angeordnete Aluminiumfolie und/oder durch mit Metall beschichtete Glas- oder Basaltfasern gebildet wird.

Das erfindungsgemäße Verbundsystem hat sich als höchst effektiv zum gleichzeitigen Brandschutz und zur EMV-Abschirmung herausgestellt. Im grundlegenden Unterschied zum dem durch die Druckschrift WO 2021/156095 A gebildeten Stand der Technik weist das erfindungsgemäß vorgeschlagene Verbundsystem ein Brandschutzvlies auf.

Durch die Verwendung eines Brandschutzvlies im Sinne der vorliegenden Erfindung werden verschiedene technische Vorteile erreicht. Zu einen ist die plastische Verformbarkeit durch das Brandschutzvlies gegeben. Der resultierende Formkörper ist nicht brüchig und besser verarbeitbar. In Kombination mit den anderen Schichten des erfindungsgemäßen Verbundsystems besteht ein potentiell besser Brandschutz, auch gegenüber den üblichen Materialien wie Glimmer und Mica. Darüber hinaus sind insbesondere Materialien wie Mica dahingehend nachteilig, dass sie aus unklaren Quellen stammen , wobei sich Probleme aus dem Lieferkettengesetz oder Compliance-bzw. Nachhaltigkeitsprobleme ergeben können. Unter einem Vlies wird im Rahmen der vorliegenden Erfindung ein Vliesstoff verstanden, welcher ein Gebilde aus Fasern begrenzter Länge, Endlosfasern (Filamenten) oder geschnittenen Garnen jeglicher Art und jeglichen Ursprungs ist, die auf irgendeine Weise zu einem Vlies (einer Faserschicht, einem Faserflor) zusammengefügt und auf irgendeine Weise miteinander verbunden worden sind. Die erfindungsgemäßen Vliese sind flexible textile Flächengebilde, d. h. sie sind verhältnismäßig leicht biegsam, ihre Hauptstrukturelemente sind textile Fasern und sie weisen eine vergleichsweise geringe Dicke gegenüber ihrer Länge und Breite auf. Eine genaue Beschreibung des Brandstoffvlieses erfolgt weiter untenstehend.

In dem Stand der Technik WO 2021/156095 A sind die durch das Vlies gebildete Brandschutzschicht und der Bestandteil zur Abschirmung elektronischer, magnetischer und/oder elektromagnetischer Strahlung einen SMC-Grundkörper voneinander getrennt. Dieser Schichtaufbau gemäß der WO 2021/156095 A wird im Rahmen der vorliegenden Erfindung, wie weiter untenstehend beschrieben, vermieden. Darüber hinaus sieht das Verbundsystem der WO 2021/156095 A generell kein Brandschutzvlies vor.

Im Rahmen der vorliegenden Erfindung kann der mindestens eine Bestandteil (c) zur Abschirmung elektrischer, magnetischer und/oder elektromagnetischer Strahlung eine Aluminiumfolie (erste Ausführungsform der vorliegenden Erfindung) und/oder mit Aluminium beschichtete Glas- oder Basaltfasern (zweite Ausführungsform der vorliegenden Erfindung) sein. Diese beiden Ausführungsformen werden weiter unten beschrieben.

Das erfindungsgemäße Verbundsystem als Brandschutzvorrichtung, welches beispielsweise als Matte oder Platte ausgebildet sein kann, kann zum Beispiel als Hitze- und/oder Brandschutz unter dem Gehäusedeckel eines Batterie-Packs für den Einsatz in Fahrzeugen angebracht werden, um einerseits die Batteriezellen vor äußeren Temperaturen und/oder Feuereinwirkung zu schützen und andererseits ein Übergreifen von Hitze und/oder Feuer auf weitere Komponenten des Fahrzeugs und/oder die Fahrgastzelle beim thermischen Durchgehen von Batteriezellen zu verhindern.

Üblicherweise ist damit das erfindungsgemäße Verbundsystem in einem direkten Kontakt zu der Batterie.

Im Nachfolgenden werden die einzelnen Schichten des erfindungsgemäßen Verbundsystems beschrieben.

### Trägerschicht

Die Trägerschicht des Verbundsystems, die gleichzeitig als Isolationsschicht ausgebildet sein kann, kann starr oder flexibel ausgebildet sein.

Die Trägerschicht umfasst beispielsweise ein Glasfaservlies oder Glasfasergewebe aus AES-Glas, E-Glas, ECR-Glas, Silika-Glas, S-Glas, R-Glas, M-Glas, C-Glas, D-Glas, AR-Glas, T-Glas und/oder Q-Glas enthält. Hierbei ist Silika-Glas bevorzugt. Insbesondere bevorzugt sind Silikatfasernadelmatten.

Bevorzugt enthält die Trägerschicht eine Silikatfasernadelmatte, deren Silikatfasern Faserstärken im Bereich von 5 bis 20 µm, bevorzugt von 6 bis 12 µm aufweisen.

Weiterhin werden bevorzugt Silikatfasernadelmatten mit einer Dichte von 120 bis 180 kg/m³, weiter bevorzugt von 130 bis 170 kg/m³, noch weiter bevorzugt von 140 bis 160 kg/m³, noch weiter bevorzugt im Bereich von 150 kg/m³, eingesetzt.

Die erfindungsgemäß zu verwendende Silikatfasernadelmatte weist vorzugsweise ein Nennflächengewicht von 200 bis 2000 g/m², weiter bevorzugt 250 bis 1500 g/m², weiter bevorzugt 300 bis 1000 g/m², noch weiter bevorzugt 350 bis 500 g/m², auf.

Die erfindungsgemäß zu verwendende Silikatfasernadelmatte weist Fasern mit einer Nenndicke von vorzugsweise 2 bis 15 mm, weiter bevorzugt 3 bis 12 mm, noch weiter bevorzugt 4 bis 8 mm, auf.

Die erfindungsgemäß zu verwendende Silikatfasernadelmatte weist eine Wärmeleitfähigkeit auf, die vorzugsweise ausgewählt ist aus der Gruppe, bestehend aus 0,038 bis 0,046 W/mk (100 °C), 0,048 bis 0,056 W/mk (200 °C), 0,061 bis 0,69 W/mk (300 °C), 0,78 bis 0.86 W/mk (400 °C), 0,094 bis 0,102 W/mk (500 °C), 0,115 bis 0,123 W/mk (600 °C), 0,144 bis 0,152 W/mk (700 °C), 0,171 bis 0,179 W/mk (800 °C) und 0,186 bis 0,194 W/mk (900 °C).

Silikatfasernadelmatten sind grundsätzlich kommerziell erhältlich und werden üblicherweise mittels Nadeltechnik und bevorzugt ohne Zugabe von Bindemitteln hergestellt. Die Silikatfasernadelmatten werden vorzugsweise ausschließlich aus Silika-Glasfasern gebildet, wobei die Silika-Glasfasern zu mindestens 94 Gew.-% aus SiO₂, weiter bevorzugt mindestens 96 Gew.-% SiO₂, hergestellt sind, so dass die resultierende Silikatfasernadelmatte eine ausreichende Temperaturbeständigkeit aufweist. Die erfindungsgemäß vorgeschlagenen Silikatfasernadelmatten zeichnen sich durch hervorragende thermische Isolationseigenschaften sowie gute Vibrationsbeständigkeit aus. Sie haben eine sehr gute chemische Beständigkeit, hohe physikalische Eigenschaften und eine hohe mechanische Belastbarkeit, was ihre Anwendung als Trägermaterial insbesondere bevorzugt macht, da das erfindungsgemäße Verbundsystem vorzugsweise plastisch verformbar sein muss, um sich an die dreidimensionale Form einer Batterie oder eines Batteriegehäuses anzupassen.

Die vorstehend genannten Eigenschaften der erfindungsgemäß bevorzugten Silikatfasernadelmatte führen zu den gewünschten guten Isolationseigenschaften des erfindungsgemäßen Verbundsystems bei hohen Temperaturen. Wenn eine Silikatfasernadelmatte mit den vorstehenden Eigenschaften im Rahmen der Herstellung des erfindungsgemäßen Verbundsystems verwendet wird, führt die Erhöhung der Dichte (z.B. durch ein Verpressen im erfindungsgemäßen Herstellungsverfahren) zu einer weiteren Verbesserung der Isolation von Wärmestrahlung. Eine Silikatfasernadelmatte mit einem Anteil an Si-Fasern von mindestens 94 bzw. 96 Gew.-% SiOz kann sehr hohe Temperaturen standhalten und somit dem Durchbrand mehr entgegensetzen als andere Fasern.

Im Rahmen der vorliegenden Erfindung hat es sich als besonders bevorzugt herausgestellt, wenn die Trägerschicht nicht nur alleine durch eine Silikatfasernadelmatte gebildet wird, sondern zwei diskreten Schichten, nämlich die vorstehend beschriebene Silikatfasernadelmatte und zusätzlich eine Edelstahlfolie, umfasst. In dieser Ausführungsform der vorliegenden Erfindung ist die Edelstahlfolie bevorzugt eine Edelstahlfolie aus VA-Stahl.

Die Edelstahlfolie weist vorzugsweise eine Schichtdicke von 0,02 bis 0,40 mm, weiter bevorzugt von 0,08 bis 0,22 mm, weiter bevorzugt von 0,10 bis 0,20 mm, noch weiter bevorzugt 0,12 bis 0,18 mm, auf. Eine Edelstahlfolie ist in dem erfindungsgemäßen Verbundsystem insbesondere als Durchstoßbarriere für brennende Metallpartikel von Vorteil.

Insbesondere die Auswahl der Schichtdicke der Edelstahlfolie kann für die vorliegende Erfindung relevant sein. Zum einen muss eine Balance zwischen einer ausreichenden Schichtdicke, so dass ein ausreichender Flammschutz und eine ausreichende Durchstoßbarriere gegeben ist, und einer Berücksichtigung des Gewichts der Edelstahlfolie gefunden werden. Diese Balance wird insbesondere mit den vorstehenden Schichtdicken getroffen.

Zusätzlich bringt die erfindungsgemäß konkret vorgeschlagene Edelstahlfolie aus VA-Stahl überraschende Vorteile mit sich. Eine Edelstahlfolie aus VA-Stahl erzeugt eine mechanische Stabilität in den resultierenden Verbundkörper, so dass die Möglichkeit einer dreidimensionale Prägung bestehen bleibt. Im Vergleich zu den in dem erfindungsgemäßen Verbundsystem verwendeten textilen Komponenten zeigt die Edelstahlfolie aus VA-Stahl im Wesentlichen kein Rückstellverhalten auf.

Es hat sich gezeigt, dass durch die vorgeschlagene Auswahl des Trägermaterials aus einer Silikatfasernadelmatte und einer Edelstahlfolie ein formstabiles Verbundsystem resultiert. Die erfindungsgemäß bevorzugt vorgesehene Silikatfasernadelmatte weist dabei den Vorteil auf, dass das resultierende Verbundsystem plastisch verformbar ist.

In einer weiteren Ausgestaltung kann auch ein Wirrfaservlies verwendet werden, welches aus mit Aluminium beschichteten Fasern aufgebaut ist. Wirrfaservlies, auch als Wirrlage-Vliese, Wirrlage-Vliesstoffe, Wirrvliese bzw. Wirrvliesstoffe bezeichnet, sind Vliese, bei denen die Spinnfasern bzw. die Filamente jede beliebige Richtung einnehmen können, d. h. relativ gleich verteilt in allen Richtungen des Vliesstoffes vorliegen.

### Als Brandschutzvlies ausgebildete Schicht (= Brandschutzschicht)

Die Brandschutzschicht enthält vorzugsweise ein Glasfaservlies oder Glasfasergewebe, das mit einer Brandschutzzusammensetzung, umfassend die mindestens eine ablativ-wirkende Verbindung, beschichtet ist.

Im Rahmen der vorliegenden Erfindung wird die Bezeichnung Brandschutzvlies synonym für ein Glasfaservlies oder ein Glasfasergewebe verwendet.

Vorzugsweise enthält das Glasfaservlies oder das Glasfasergewebe Glasfasern aus AES-Glas, E-Glas, ECR-Glas, Silika-Glas, S-Glas, R-Glas, M-Glas, C-Glas, D-Glas, AR-Glas, T-Glas und/oder Q-Glas enthält. Hierbei ist E-Glas bevorzugt.

Erfindungsgemäß werden das Glasfaservlies oder das Glasfasergewebe so ausgewählt, dass eine plastische Verformbarkeit des resultierenden Verbundsystems gegeben ist. Entsprechende Materialien für das Glasfaservlies oder das Glasfasergewebe sind dem Fachmann per se bekannt.

Bevorzugt enthält die Brandschutzschicht ein Glasfaservlies. Glasfaservliese sind in vielen Ausführungen und für diverse Anwendungen bekannt. Ebenfalls bekannt sind Verfahren zur Herstellung von Glasfaservliesen aus Glasfasern und Binder sowie ggf. weiteren Additiven. Die Additive können bestimmte Eigenschaften, beispielsweise den Heißwasserwiderstand, des fertigen Glasfaservlieses verbessern.

Es ist bevorzugt, dass das Flächengewicht des Glasfaservlieses zwischen 40 g/m² und 60 g/m² liegt.

Die Glasfasern des Glasfaservlieses haben bevorzugt eine Länge im Bereich von 2 mm bis 10 mm, weiter bevorzugt im Bereich von 3 bis 8 mm, noch weiter bevorzugt im Bereich von 4 bis 7 mm.

Was das Bindemittel des Glasfaservlieses betrifft, so besteht hier ein erheblicher Spielraum. Besonders vorteilhafte Bindemittel sind Harnstoffharze, modifizierter Polyvinylalkohol, Polyacrylsäure, Wassergläser, PU-Bindemittel und Mischungen der vorgenannten Bindemittel. Ganz besonders bevorzugt wird ein modifizierter Polyvinylalkohol als Bindemittel eingesetzt.

Das Glasfaservlies oder das Glasfasergewebe wird mit einer Brandschutzzusammensetzung beschichtet. Die Brandschutzzusammensetzung enthält zwingend mindestens eine ablativ-wirkende Verbindung. Es ist besonders bevorzugt, dass das Glasfaservlies oder das Glasfasergewebe zwei oder mehr ablativ-wirkende Verbindungen enthält.

Aufgrund der Porosität des Glasfaservlieses bzw. Glasfasergewebes kann die Brandschutzzusammensetzung in das Vlies bzw. Gewebe einpenetrieren. Je nach Art der Ausgestaltung der Beschichtung bzw. Durchtränkung des Vlieses bzw. Gewebes resultiert eine einschichtige Struktur aus Glasfaservlies / Glasfasergewebe und Beschichtungszusammensetzung bzw. eine zweischichtige Struktur, in welcher das Vlies / Gewebe und die Brandschutzzusammensetzung noch separat vorliegen.

Im Rahmen der vorliegenden Erfindung ist ein gewisses Einpenetrieren der Brandschutzzusammensetzung erwünscht, da das Einpenetrieren zu einer verbesserten Verkrallung der Brandschutzzusammensetzung im Vlies führt und somit insgesamt stabiler ist und nicht so leicht abplatzt.

Eine ablativ-wirkende Verbindung ist eine Verbindung, die unter Hitzeeinwirkung kühlend wirkt. Dabei wird durch endotherme Vorgänge gebundenes Wasser freigesetzt und ein Kühleffekt erzeugt. Zur Erzielung dieser Ablationskühlung können als ablativ-wirkende Verbindung vorzugsweise solche verwendet werden, die keramisierend, verkohlend, sublimierend oder aufblähbar sind.

In einer bevorzugten Ausführungsform wird mindestens eine ablativ-wirkende Verbindung verwendet, die keramisiert. Durch die Keramisierung wird beispielsweise ein Durchschlagen von Flammen verhindert.

Bevorzugte ablativ-wirkende Verbindung sind ausgewählt aus der Gruppe bestehend aus LiNO₃·3H₂O, Na₂CO₃H₂O (Thermonatrit), Na₂CO₃·7H₂O, Na₂CO₃·10H₂O (Soda), Na₂Ca(CO₃)₂·2H₂O (Pirssonit), Na₂Ca(CO₃)₂·5H₂O (Gaylussit), Na(HCO₃)Na₂CO₃·2H₂O (Trona), Na₂S₂O₃·5H₂O, Na₂O₃Si·5H₂O, KF·2H₂O, CaBr₂·2H₂O, CaBr₂·6H₂O, CaSO₄·2H₂O (Gips), Ca(SO₄)·½H₂O (Bassanit), Ba(OH)₂·8H₂O, Ni(NO₃)₂·6H₂O, Ni(NO₃)₂·4H₂O, Ni(NO₃)₂·2H₂O, Zn(NO₃)₂·4H₂O, Zn(NO₃)₂·6H₂O, (ZnO)₂(B₂O₃)₂·3H₂O, Mg(NO₃)₂·6H₂O (US 5985013 A), MgSO₄·7H₂O (EP 1 069 172 A2), Mg(OH)₂, Al(OH)₃, Al(OH)₃·3H₂O, AIOOH (Böhmit), Al₂[SO₄]₃·nH₂O mit n = 14 - 18, KAI(SO₄)₂·12H₂O (EP 1 069 172 A2), CaO·Al₂O₃·10H₂O (Nesquehonit), MgCO₃·3H₂O (Wermlandit), Ca₂Mg₁₄(Al,Fe)₄CO₃(OH)₄₂·29H₂O (Thaumasit), Ca₃Si(OH)₆(SO₄)(CO₃)·12H₂O (Artinit), Ca₆Al₂[(OH)₁₂|(SO₄)₃]·26H₂O (Ettringit), 3CaO·Al₂O₃·3CaSO₄·32H₂O (Hydromagnesit), Mg₅(OH)₂(CO₃)₄·4H₂O (Hydrocalumit), Ca₄Al₂(OH)₁₄·6H₂O (Hydrotalkit), Mg₆Al₂(OH)₁₆CO₃·4H₂O Alumohydrocalcit, CaAl₂(OH)₄(CO₃)₂·3H₂O (Scarbroit), Al₁₄(CO₃)₃(OH)₃₆ (Hydrogranat), 3CaO·Al₂O₃·6H₂O (Dawsonit), NaAl(OH)CO₃, Al(OH)₃ (Hydrargillit, ATH), wasserhaltige Zeolithe, Vermikulite, Colemanit, Perlite, Glimmer, Alkalisilikate, Borax, modifizierten Kohlen, Graphiten, Kieselsäuren und Gemischen davon.

In einer bevorzugten Ausführungsform der Erfindung umfasst die ablativ-wirkende Verbindung Glimmer, Vermikulite und/oder Ettringit, insbesondere Glimmer, Vermikulite und/oder synthetisches Ettringit.

In einer bevorzugten Ausführungsform der Erfindung umfasst die ablativ-wirkende Verbindung Ettringit. In einer ganz bevorzugten Ausführungsform der Erfindung umfasst die ablativ-wirkende Verbindung synthetisches Ettringit.

Ettringit (Ca₆Al₂[(OH)₁₂|(SO₄)₃]·26 H₂O) ist ein selten vorkommendes Mineral aus der Mineralklasse der wasserhaltigen Sulfate mit fremden Anionen. Synthetisches Ettringit wird beispielsweise in Form von wässrigen Suspensionen angeboten. Die wässrigen Suspensionen können ferner organische Bindemittel auf Polymerbasis, wie zum Beispiel Acrylate, umfassen.

In einer weiteren bevorzugten Ausführungsform der Erfindung umfasst die ablativ-wirkende Verbindung Al(OH)₃ (Hydrargillit, ATH).

Al(OH)₃ wird bei Temperaturen über 200 °C in Aluminiumoxid und Wasser gespalten. Das Wasser kühlt den Brandherd und verdünnt die entstehenden Gase. Das entstehende Aluminiumoxid bildet eine keramische Schutzschicht aus.

In einer bevorzugten Ausführungsform umfasst die Brandschutzzusammensetzung zwei oder mehr ablativ-wirkende Verbindungen. Es ist weiter bevorzugt, dass die Brandschutzzusammensetzung zwei ablativ-wirkende Verbindungen umfasst. In diesem Fall ist es ganz besonders bevorzugt, dass die ablativ-wirkende Verbindung synthetisches Ettringit und Al(OH)₃ umfasst.

Die Menge an ablativ-wirkender Verbindung in der Brandschutzzusammensetzung beträgt vorzugsweise mindestens 50 Gew.-%, mehr bevorzugt mindestens 60 Gew.-%, noch mehr bevorzugt mindestens 70 Gew.-% und ganz besonders bevorzugt mindestens 75 Gew.-%, jeweils bezogen auf das Gesamtgewicht der Brandschutzzusammensetzung.

Um die anwendungstechnischen Eigenschaften der Brandschutzzusammensetzung und/oder die Brandschutzwirkung der Brandschutzschicht zu verbessern, kann die Brandschutzzusammensetzung weitere Inhaltsstoffe enthalten.

Diese weiteren Inhaltsstoffe können insbesondere Entschäumungsmittel, Lösungsmittel, Bindemittel, Verdickungsmittel und/oder Blähglas umfassen.

Zur Herstellung der Brandschutzzusammensetzung werden die Inhaltsstoffe in einem Dissolver bei Raumtemperatur (25 °C) homogenisiert.

Die Brandschutzzusammensetzung wird einseitig oberflächig auf das Glasfaservlies oder das Glasfasergewebe aufgebracht. Dies kann beispielsweise mittels Rakeln oder Walzen erfolgen. Anschließend wird das beschichtete Glasfaservlies oder Glasfasergewebe, beispielsweise mit Hilfe eines Trocknungstunnels bei Temperaturen um 190 °C, getrocknet.

Es ist bevorzugt, dass das Flächengewicht der Brandschutzschicht zwischen 400 g/m² und 600 g/m² liegt. Dieses Flächengewicht ist im Rahmen der vorliegenden Erfindung von Vorteil, weil es ein prozesssicheres Auftragen auf den zu verwendenden Glasfaservliesen mit Flächengewicht zwischen 40 g/m² und 60 g/m² ermöglicht. Das Flächengewicht des Glasfaservlies sowie der Brandschutzzusammensetzung muss vorzugsweise aufeinander abgestimmt werden, wobei gleichzeitig die resultierende Dicke des Verbundsystems sowie die Materialeigenschaften (keine porösen Strukturen sollen ausgebildet werden) berücksichtigt werden müssen.

In einer weiteren Ausführungsform kann die Trägerschicht des erfindungsgemäßen Verbundsystems ebenfalls aus einer oder mehreren der vorbeschriebenen Brandschutzschichten aufgebaut sein. Wenn die Trägerschicht aus mehreren der vorbeschriebenen Brandschutzschichten aufgebaut wird, so werden diese vorzugsweise über eine weiter unten beschriebenen Klebeschicht miteinander verbunden.

### Klebstoffschicht

Die vorstehend beschriebenen Schichten, aber auch alle weiteren Schichten des erfindungsgemäßen Verbundsystems, werden vorzugsweise über eine oder mehrere Klebstoffschichten miteinander verbunden.

Die Klebstoffschichten im Rahmen der vorliegenden Erfindung sind vorzugsweise auf einem Hotmelt-Klebstoff basierend; die einzelnen Schichten sind damit über eine Hotmelt-Kaschierung miteinander verbunden.

In diesem Fall kann der Hotmelt-Klebstoff ein physikalisch abbindender Thermoplast-Klebstoff oder ein chemisch abbindender Duroplast-Klebstoff sein.

Der Hotmelt-Klebstoff wird bevorzugt ausgewählt aus der Gruppe, bestehend aus Hotmelts auf Basis von Kautschuk, Hotmelts auf Basis von Polyamid, Hotmelts auf Basis von Polyolefin, Hotmelts auf Basis von Ethylen-Vinylacetat und Hotmelts auf Basis von Polyurethan.

Für den erfindungsgemäßen Anwendungszweck ist es im Allgemeinen bevorzugt, wenn der Hotmelt-Klebstoff so ausgebildet ist, dass er auf die jeweiligen Schichten des Verbundsystems aufgesprüht werden kann.

Im Rahmen der vorliegenden Erfindung ist es des Weiteren bevorzugt, wenn der Hotmelt-Klebstoff eine kurze offene Zeit und haftklebend ausgebildet ist.

Dabei ist es des Weiteren bevorzugt, wenn der Hotmelt dauerklebrig ausgebildet ist.

Durch die möglicherweise erforderliche dreidimensionale Verformung des erfindungsgemäßen Verbundsystems kann es während der Verformung zu einem Kontaktverlust von Bereichen benachbarter Schichten kommen, die aufgrund der dauerhaft ausgebildeten Klebstoffwirkung später wieder ausgeglichen werden kann.

Die jeweiligen Klebestoffschicht können beispielsweise auch einen thermoplastischen Polymerfilm, Synthese-Kautschuk, Wasserglas, Polyurethan, oder Acrylat enthalten. Je nach Inhaltsstoff und Füllmaterialien unterscheidet man eine Thermoplastenklebeschicht, eine Sprühkleberklebeschicht (Synthese-Kautschuk), eine Acrylatkleberklebeschicht oder eine Brandschutzkleberklebeschicht (Wasserglas). Geeignete thermoplastische Polymere umfassen beispielsweise Acrylnitril-Butadien-Styrol (ABS), Polyamide (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK) und Polyvinylchlorid (PVC). Besonders bevorzugt enthält die Klebeschicht einen thermoplastischen Polyethylenfilm.

Diese Klebstoffschicht wird zwischen einzelnen Schichten des erfindungsgemäßen Verbundsystems oder nur zwischen einigen Schichten des erfindungsgemäßen Verbundsystems verwendet.

### Bestandteil zur Abschirmung elektrischer, magnetischer und/oder elektromagnetischer Strahlung

Im Rahmen der vorliegenden Erfindung umfasst das erfindungsgemäße Verbundsystem mindestens einen Bestandteil zur Abschirmung elektrischer, magnetischer und/oder elektromagnetischer Strahlung.

Die vorliegende Erfindung sieht zwei Ausgestaltungen für diese Abschirmung elektrischer, magnetischer und/oder elektromagnetischer Strahlung vor, die im Nachgang nunmehr beschrieben werden.

### Erste Ausgestaltung

Der erfindungsgemäß vorgesehene Bestandteil zur elektrischen, magnetischen und/oder elektromagnetischer Abschirmung kann zunächst einmal durch eine Metallfolie ausgebildet sein, die eine wirksame Abschirmung vor elektromagnetischer Strahlung ermöglicht. Die Metallfolie kann hierbei bevorzugt eine Kupferfolie oder eine Aluminiumfolie oder eine Nickelfolie oder eine Silberfolie oder eine Goldfolie oder eine Folie aus einem Eisenbasiswerkstoff (z.B. eine rostfreie Stahllegierung) sein.

In einer bevorzugten Ausführungsform dieser ersten Ausgestaltung der vorliegenden Erfindung wird der Bestandteil durch eine Aluminiumfolie oder ein Aluminiumband gebildet. Eine Aluminiumfolie unterscheidet sich gemäß der Norm EN 485-2 durch die Schichtdicke von einem Aluminiumband (bis 0,20 mm Schichtdicke (Aluminiumfolie) vis-à-vis mehr als 0,20 mm Schichtdicke (Aluminiumband)).

Im Nachfolgenden werden beide Begrifflichkeiten zusammen als Aluminiumfolie bezeichnet.

In dieser ersten Ausgestaltung des erfindungsgemäßen Verbundkörpers umfasst der Verbundkörper somit mindestens eine Aluminiumfolie. Zusätzlich ist es aber auch möglich, dass das erfindungsgemäße Verbundsystem zwei oder mehrere Aluminiumfolien umfasst.

Für eine ausreichende Abschirmung des erfindungsgemäßen Verbundkörpers werden vorzugsweise Aluminiumfolien verwendet, die eine Schichtdicke von 0,1 bis 0,5 mm, weiter bevorzugt 0,15 bis 0,45 mm, noch weiter bevorzugt 0,20 bis 0,40 mm, aufweisen.

Aufbau des erfindungsgemäßen Verbundsystems
in den nachstehend beschriebenen erfindungsgemäßen Verbundsystemen ist es vorzugsweise vorgesehen, dass die Aluminiumfolie mindestens einem Brandschutzvlies unmittelbar benachbart ist, wobei zwischen dem Brandschutzvlies und der Aluminiumfolie gegebenenfalls eine Klebstoffschicht vorgesehen sein kann.

Im Rahmen der vorliegenden Erfindung wird unter der Bezeichnung "unmittelbar benachbart" im Allgemeinen verstanden, dass die beschriebenen Schichten zwar benachbart sind, aber über eine Klebstoffschicht miteinander verbunden sein können. Diese betrifft nicht nur die konkrete Gestaltung einer Aluminiumfolie und einer Brandschutzschicht, sondern jedwede Schichtfolge.

Das erfindungsgemäße Verbundsystem kann auch mindestens zwei Brandschutzvliese und mindestens zwei Aluminiumfolien zur Abschirmung umfassen, wobei jeweils eine Aluminiumfolie unmittelbar benachbart zu jeweils einem Brandschutzvlies angeordnet ist.

Auch in diesem Aufbau können die Aluminiumfolien, wiederum gegebenenfalls über eine Klebstoffschicht, mit jeweils einem Brandschutzvlies verbunden sein.

### Erste Ausführungsform der ersten Ausgestaltung

Ein möglicher Aufbau des erfindungsgemäßen Verbundsystems ergibt sich dabei dergestalt, dass die Aluminiumfolie(n) auf der/den gegenüberliegenden Seite(n) des/der Brandschutzvlies(e) zu der Trägerschicht vorgesehen ist/sind, wobei die Trägerschicht beispielsweise aus der vorstehend beschriebenen Silikatfasernadelmatte und der vorstehend beschriebenen Edelstahlfolie bestehen kann und die Trägerschicht zwischen zwei Brandschutzvliesen angeordnet sein kann.

Wenn im Rahmen der vorliegenden Erfindung von einem Verbundsystem mit einer Trägerschicht, beispielsweise aus der vorstehend beschriebenen Silikatfasernadelmatte und der vorstehend beschriebenen Edelstahlfolie, und zwei Brandschutzvliesen ausgegangen wird, kann das Verbundsystem zwei Aluminiumfolien umfassen, die den Schichtaufbau aus den Brandschutzvliesen und der Trägerschicht umhüllt.

In dieser Ausgestaltung kann somit vorgesehen sein, dass die Aluminiumfolien einen Schichtaufbau, bestehend aus einem ersten Brandschutzvlies, welches benachbart zu einer Trägerschicht vorgesehen ist, wobei die Trägerschicht auf der dem ersten Brandschutzvlies gegenüberliegenden Seite mit einem weiteren Brandschutzvlies versehen ist, umhüllt.

In dieser Ausgestaltung kann somit ferner vorgesehen sein, dass die Aluminiumfolien einen Schichtaufbau, bestehend aus einem ersten Brandschutzvlies, welches benachbart zu einer Trägerschicht vorgesehen ist, wobei die Trägerschicht die zuvor beschriebene Silikatfasernadelmatte und die zuvor beschriebene Edelstahlfolie umfasst und auf der dem ersten Brandschutzvlies gegenüberliegenden Seite mit einem weiteren Brandschutzvlies versehen ist, umhüllen.

In dieser Ausgestaltung sind die Aluminiumschichten insbesondere nach außen gerichtet und weisen mindestens die Trägerschicht und die Brandschutzschicht auf einer Seite der Aluminiumschichten auf.

Beansprucht wird demgemäß ein wie vorstehend beschriebenes Verbundsystem, in welchem folgender Schichtaufbau realisiert ist:
a1) Aluminiumfolie, benachbart zu
b1) Brandschutzvlies, benachbart zu
c1) Trägerschicht, benachbart zu
d1) Brandschutzvlies, benachbart zu
e1) Aluminiumfolie;
wobei die einzelnen Schichten b1) bis d1) jeweils über eine wie vorstehend beschriebenen Klebstoffschicht miteinander verbunden sein können und die Aluminiumfolie die Schichten b1) bis d1) insbesondere ohne weitere Klebstoffschicht umhüllt.

Beansprucht wird demgemäß ein wie vorstehend beschriebenes Verbundsystem, in welchem folgender Schichtaufbau realisiert ist:
a2) Aluminiumfolie, benachbart zu
b2) Brandschutzvlies, benachbart zu
c2.1) Silikatfasernadelmatte, benachbart zu
c2.2) Edelstahlfolie, benachbart zu
d2) Brandschutzvlies, benachbart zu
e2) Aluminiumfolie,
wobei die einzelnen Schichten b2) bis d2) jeweils über eine wie vorstehend beschriebenen Klebstoffschicht miteinander verbunden sein können und die Aluminiumfolie die Schichten b2) bis d2) insbesondere ohne weitere Klebstoffschicht umhüllt.

Wenn im Rahmen der vorliegenden Erfindung zwei Aluminiumfolien verwendet werden, welche die Schichten b1/b2) bis d1/d2) (mit c1) oder c2.1) und c2.2)) umhüllen, sind die zwei Aluminiumfolien vorzugsweise am Rand miteinander gebördelt.

In dieser Ausgestaltung kann der resultierende Verbundkörper mit den vorbeschriebenen Schichten a1/a2) bis e1/e2) (mit c1) oder c2.1) und c2.2)) als integriertes Batteriegehäuse verwendet werden; eine zusätzliche Verwendung eines Batteriegehäuses, beispielsweise aus einem Kunststoff, ist nicht zwingend erforderlich. In dem Fall, dass der erfindungsgemäße Schichtaufbau a1/a2) bis e1/e2) (mit c1) oder c2.1) und c2.2)) als Batteriegehäuse verwendet wird, wird die Batterie benachbart zu einer der beiden Aluminiumfolien angeordnet, da der Schichtaufbau des erfindungsgemäßen Verbundsystems symmetrisch ausgebildet ist.

In dieser Ausgestaltung kann der resultierende Verbundkörper mit den vorbeschriebenen Schichten a1/a2) bis e1/e2) (mit c1) oder c2.1) und c2.2)) auch nur als Deckel eines Batteriegehäuses verwendet werden, wobei der verbleibende Teil des Batteriegehäuses durch einen üblicherweise im Batteriebereich verwendete Kunststoff gebildet wird.

### Zweite Ausführungsform der ersten Ausgestaltung

In einer zweiten Ausführungsform der ersten Ausgestaltung kann das erfindungsgemäße Verbundsystem folgenden Schichtaufbau ausweisen, wobei die einzelnen Schichten vorzugsweise wie vorstehend beschrieben ausgebildet sind:
a3) Edelstahlfolie,
b3) Brandschutzschicht,
c3) Trägerschicht, vorzugsweise aus einer wie vorstehend beschriebenen Silikatfasernadelmatte,
d3) Brandschutzschicht,
e3) Aluminiumfolie.

In dem Fall, in welchem eine Aluminiumfolie und/oder eine Edelstahlfolie zur elektromagnetischen Abschirmung verwendet wird, die sich außerhalb der Anordnung von Brandschutzschichten) und Trägerschicht(en) in dem Verbundmaterial befindet, also nach au-ßen gerichtet ist, ist die elektromagnetische Abschirmung besser als in dem Fall, dass entsprechende Aluminiumschichten und/oder Edelstahlschichten innenliegend sind und von Brandschutzschicht(en) und/oder Trägerschicht(en) umfasst sind.

Eine weitere Variante der zweiten Ausführungsform der ersten Ausgestaltung betrifft ein erfindungsgemäßes Verbundsystem aus folgendem Schichtaufbau, wobei die einzelnen Schichten vorzugsweise wie vorstehend beschrieben ausgebildet sind:
a4) Edelstahlfolie,
b4) Brandschutzschicht,
c4) Aluminiumfolie,
d4) Trägerschicht, vorzugsweise aus einer wie vorstehend beschriebenen Silikatfasernadelmatte,
e4) Brandschutzschicht,
f4) Edelstahlfolie.

Der Schichtaufbau der beiden Ausführungsformen des erfindungsgemäßen Verbundsystems eignet sich für einen Einbau in einen Deckel eines Batteriegefäßes.

Insbesondere der Schichtaufbau der zweiten Ausführungsform des erfindungsgemäßen Verbundsystems eignet sich für einen Einbau in einen Deckel eines Batteriegehäuses.Batteriegehäuse in einem Elektroauto sind wichtige Komponenten, die für die Aufnahme und den Schutz der Hochleistungsbatterie verantwortlich sind. Diese Gehäuse spielen eine entscheidende Rolle bei der Sicherheit, Effizienz und Langlebigkeit des Elektrofahrzeugs.

Batteriegefäße, auch als Batteriegehäuse oder Batteriepackgehäuse bezeichnet, sind die robusten, meist aus Aluminium oder anderen leichten und langlebigen Materialien, wie Kunststoffen, gefertigten Gehäuse, die die Hochleistungsbatterien eines Elektroautos umgeben. Sie haben mehrere wichtige Funktionen:
Das Gehäuse schützt die empfindlichen Batteriezellen vor äußeren Einflüssen wie Feuchtigkeit, Stößen, Vibrationen, Temperaturschwankungen und mechanischer Beschädigung. Das Gehäuse dient ferner als Kühlkörper, um die Batterien vor Überhitzung zu schützen. Oft sind in den Gehäusen Kühlkanäle und Wärmetauscher integriert, um die Batterien auf optimaler Betriebstemperatur zu halten. Die Batteriegefäße sind ferner so konstruiert, dass sie die Batteriezellen bei Unfällen oder Kollisionen schützen und ein Auslaufen von Batterieflüssigkeiten verhindern. Damit tragen die Batteriegefäße zur strukturellen Integrität des Fahrzeugs bei, indem sie als tragendes Element dienen und die Verwindungssteifigkeit des Autos erhöhen.

Batteriegefäße bestehen, wie bereits angedeutet, in der Regel aus Aluminium, das aufgrund seiner Leichtigkeit und hohen Festigkeit besonders geeignet ist, oder aus Kunststoff. Die Konstruktion umfasst bei Aluminium meistens geschweißte oder gegossene Paneele, die zu einem stabilen Gehäuse verbunden sind. Die Form des Gehäuses wird sorgfältig gestaltet, um Platz für die Batteriepakete zu schaffen und gleichzeitig die Struktur des Fahrzeugs zu unterstützen.

Diese Batteriegefäße weisen in der Regel zu öffnende Deckel auf, durch welche die Hochleistungsbatterien in das Gefäß eingeführt werden.

Diese Deckel können im Rahmen der vorliegenden Erfindung integriert die vorstehend beschriebenen erfindungsgemäßen Verbundsysteme aufweisen und mit diesen plastisch an das Gehäuse angepasst sein.

### Zweite Ausgestaltung

In einer zweiten Ausgestaltung kann die Abschirmung elektrischer, magnetischer und/oder elektromagnetischer Strahlung durch mit Aluminium beschichtete Glas- oder Basaltfasern erfolgen.

Diese mit Aluminium beschichtetem Fasern sind Verbundmaterialien, die aus Glas- oder Basaltfasern bestehen und mit einer Aluminiumbeschichtung versehen werden. Diese Beschichtung verleiht den Fasern zusätzliche Eigenschaften und Anwendungsmöglichkeiten.

Die Beschichtung wird normalerweise durch thermisches Aufdampfen oder Aufsprühen von Aluminium auf die Oberfläche der Fasern aufgebracht. Die Aluminiumbeschichtung verbessert die mechanischen Eigenschaften der Fasern auf verschiedene Arten:
Die Beschichtung erhöht die Zugfestigkeit der Fasern, was sie für Anwendungen mit hohen mechanischen Belastungen geeignet macht. Beschichtete Fasern weisen eine verbesserte Biegefestigkeit auf, was ihre Verwendung in strukturellen Anwendungen begünstigt. Die Aluminiumbeschichtung trägt zur erhöhten Schlagfestigkeit der Fasern bei, wodurch sie widerstandsfähig gegenüber mechanischer Beanspruchung sind.

Die Aluminiumbeschichtung verbessert darüber hinaus die Fähigkeit der Fasern, Wärme und hohe Temperaturen zu widerstehen. Dies macht sie geeignet für Anwendungen, bei denen Hitzeschutz erforderlich ist, wie im Brandschutz. Hinzukommend wirkt die Aluminiumbeschichtung elektrisch abschirmend.

Die Aluminiumbeschichtung bietet zusätzlich einen gewissen Grad an Korrosionsbeständigkeit, was beschichtete Fasern für Anwendungen in korrosiven Umgebungen geeignet macht.

Der Durchmesser der verwendeten Filamente an Glas- oder Basaltfasern beträgt vorzugsweise 5 bis 24 µm.

Die Aluminiumbeschichtung weist vorzugsweise eine Dicke von 0,1 bis 3 µm auf, wodurch einerseits eine gute Abschirmung erreicht wird, aber gleichzeitig auch die Verarbeitbarkeit gewährleistet ist.

Die Filamentfaserlänge beträgt vorzugsweise 1 bis 20 mm.

Auch in dieser zweiten Ausgestaltung ist es bevorzugt, dass die Materialien, welche eine elektromagnetsiche Abschirmung bewirken, nach außen gerichtet sind und sich vorzugsweise außerhalb der Anordnung von Brandschutzschicht(en) und Trägerschicht(en) in dem Verbundmaterial befinden.

In der zweiten Ausgestaltung kann ein erfindungsgemäßes Verbundsystem, welches beispielsweise aus den zuvor beschriebenen Schichten (a1) bis e1), a2) bis e2), a3) bis e3) oder a4) bis f4)) aufgebaut ist, auf zumindest einer Seite durch einen aus Kunststoff gebildeten Gehäuseteil abgedeckt, wobei in den aus Kunststoff gebildeten Gehäuseteil mit Aluminium beschichtete Glas- oder Basaltfasern eingearbeitet sind.

In der zweiten Ausgestaltung kann ein erfindungsgemäßes Verbundsystem, welches beispielsweise aus den zuvor beschriebenen Schichten (a1) bis e1), a2) bis e2), a3) bis e3) oder a4) bis f4)) aufgebaut ist, vollständig von einem aus Kunststoff gebildeten Gehäuseteil umfasst werden, wobei in den aus Kunststoff gebildeten Gehäuseteil mit Aluminium beschichtete Glas- oder Basaltfasern eingearbeitet sind.

Diese Integration des erfindungsgemäßen Verbundsystems in einen Gehäuseteil, insbesondere in ein Gehäusedeckel, ist erfindunsggemäß von Vorteil, da der Brandschutz bzw. die elektromagnetische Abschirmung direkt bei der Konstruktion vorgesehen werden kann.

Sollte das erfindungsgemäße Verbundsystem in einem Batteriegehäuseteil integriert werden, welches die mit Aluminium beschichteten Glas- oder Basaltfasern enthält, so kann auch auf die Verwendung der Aluminiumschichten in den vorstehend erwähnten Schichtabfolgen verzichtet werden.

Dieser aus Kunststoff gebildete Gehäuseteil kann üblicherweise durch Spritzguss hergestellt werden, wobei dem Kunststoffgranulat bereits die entsprechenden mit Aluminium beschichteten Glas- oder Basaltfasern zugesetzt werden.

In einer Variante der zweiten Ausgestaltung sind die mit Aluminium beschichtete Glasoder Basaltfasern gleich Fasern aus Glas oder Basalt, die mit einer Aluminiumbeschichtung ummantelt sind.

In einer weiteren Variante der zweiten Ausgestaltung sind die mit Aluminium beschichtete Glas- oder Basaltfasern gleich Fasern aus Glas oder Basalt, die mit einer Aluminiumbeschichtung ummantelt sind und wobei der Faserkern aus geschmolzenem, dünngezogenem Basalt oder Glas gebildet, der mit Aluminium beschichtet ist.

In dieser zweiten Ausgestaltung weist das erfindungsgemäße Verbundsystem somit die nachfolgenden Schichten auf:
a) Kunststoffschicht mit Aluminium beschichteten Glas- oder Basaltfasern, benachbart zu
b) Brandschutzvlies, benachbart zu
c) Trägerschicht, benachbart zu
d) Brandschutzvlies.
oder
a) Kunststoffschicht mit Aluminium beschichteten Glas- oder Basaltfasern, benachbart zu
b) Brandschutzvlies, benachbart zu
c) Trägerschicht, benachbart zu
d) Brandschutzvlies, benachbart zu
e) Kunststoffschicht mit Aluminium beschichteten Glas- oder Basaltfasern,
wobei die Trägerschicht umfasst oder besteht aus
c1) einer Silikatfasernadelmatte, benachbart zu
c2) einer Edelstahlfolie
oder
a) Edelstahlfolie,
b) Brandschutzschicht,
c) Trägerschicht, vorzugsweise aus einer wie vorstehend beschriebenen Silikatfasernadelmatte,
d) Brandschutzschicht,
e) Aluminiumfolie.
oder
a) Edelstahlfolie,
b) Brandschutzschicht,
c) Aluminiumfolie,
d) Trägerschicht, vorzugsweise aus einer wie vorstehend beschriebenen Silikatfasernadelmatte,
e) Brandschutzschicht,
f) Edelstahlfolie.

Im Rahmen dieses Verbundsystems können die Kunststoffschichten unter Einschluss der oben genannten Schichten gemäß a) bis e) bzw. a) bis f) am Rand miteinander verbunden sein.

Die Kunststoffschicht kann hierbei vorzugsweise durch Spritzgussmaterialien hergestellt sein.

Die Gesamtdicke des erfindungsgemäßen Verbundsystems kann 1 bis 15 mm, weiter bevorzugt 2 bis 12 mm, noch weiter bevorzugt 3 bis 10 mm, betragen.

### Anordnung des erfindungsgemäßen Verbundsystems

Es ist insbesondere vorgesehen, dass das Verbundsystem mit der Brandschutzschicht, welche die mindestens eine ablativ-wirkende Verbindung enthält, in unmittelbarem Kontakt mit der Batterie angeordnet ist.

Im Rahmen der vorliegenden Erfindung wird unter dem Merkmal "eines unmittelbaren Kontakts mit der Batterie" verstanden, dass keine weitere Schicht des erfindungsgemä-ßen Verbundsystems zwischen der (Außenseite der) Batterie und dem Verbundsystem vorgesehen ist; nicht zwingend ist ein berührender Kontakt zwischen Batteriegehäuse und der Brandschutzschicht, so dass auch eine Klebstoffschicht zwischen dem erfindungsgemäßen Verbundsystem und der Batterie vorgesehen sein kann.

Wenn im Rahmen der vorliegenden Erfindung eine unmittelbare Anordnung der Brandschutzschicht auf dem Batteriegehäuse vorgesehen ist, wird vermieden, dass die Funktionsweise der in dieser Brandschutzschicht enthaltenden ablativ-wirkenden Verbindung im Brandfall mit einem Aufplatzen des verwendeten Verbundsystems einhergeht. Daher ist es für die vorliegende Erfindung von Vorteil, wenn die Schicht, enthaltend die ablativ-wirkende Verbindung, d.h. die Brandschutzschicht unmittelbar in Kontakt steht mit dem aus dem Gehäuse der Batterie.

In dem Fall der Verwendung einer Aluminiumschicht zur Erzeugung einer Abschirmung, wobei die Aluminiumschichten die Hülle um die Brandschutzschicht(en) und Trägerschicht(en) bilden, besteht das Verbundsystem natürlich über eine Aluminiumschicht in Verbindung mit der Batterie.

Alternativ kann die Brandschutzvorrichtung als Transportbehälter ausgebildet sein und beispielsweise als Transportsack für Lithium-lonen-Akkus dienen. In dieser Ausführungsform besitzt die Brandschutzvorrichtung vorzugsweise eine Öffnung, beispielsweise eine formschlüssige Verschlussvorrichtung wie einen Reißverschluss oder einen Klettverschluss, durch die das Batterie-Pack eingefügt und entnommen werden kann.

Wenn die erfindungsgemäße Brandschutzvorrichtung als Transportbehälter ausgebildet ist, ist es bevorzugt, wenn die Brandschutzvorrichtung eine plastische Verformbarkeit aufweist. Zu diesem Zweck wird insbesondere ein spezielles Trägermaterial empfohlen, dass weiter oben beschrieben wurde.

Die Brandschutzvorrichtung umfasst ein Verbundsystem und gegebenenfalls eine Hülle, in deren Inneren das Verbundsystem angeordnet ist.

Die Brandvorrichtung kann insbesondere in Form einer Matte oder Platte ausgeführt sein und Bestandteil eines Batterie-Packs zur Verwendung in einem tragbaren Gerät (zum Beispiel einem Smartphone oder einem Tablet-Computer) oder einem Elektrofahrzeug sein. Die Brandvorrichtung kann insbesondere Bestandteil eines Batterie-Packs mit mindestens einer wiederaufladbaren Lithiumionen-Batteriezelle zur Verwendung in einem tragbaren Gerät oder einem Elektrofahrzeug sein.

Entsprechend ist ein weiterer Erfindungsgegenstand der vorliegenden Anmeldung ein Batterie-Pack, umfassend
(i) ein Gehäuse,
(ii) mindestens eine wiederaufladbare Lithiumionen-Batteriezelle und
(iii) ein wie vorstehend beschriebenes Verbundsystem, dass in dem Gehäuse der mindestens einen wiederaufladbaren Lithiumionen-Batteriezelle benachbart ist.

In diesem Batterie-Pack der vorliegenden Erfindung ist das erfindungsgemäße Verbundsystem vorzugsweise in Richtung der wiederaufladbaren Lithiumionen-Batteriezelle angeordnet.

Bezüglich bevorzugter Ausführungsformen des Batterie-Pack gilt *mutatis mutandis* das für die erfindungsgemäße Verbundsystem Gesagte.

Wiederaufladbare Lithium-Batteriezellen umfassen insbesondere wiederaufladbare Lithium-Cobaltdioxid-Batteriezellen, wiederaufladbare Lithiumtitanat-Batteriezellen, wiederaufladbare Lithium-Mangan-Batteriezellen, wiederaufladbare Lithium-Eisenphosphat-Batteriezellen, wiederaufladbare Lithium-Luft-Batteriezellen, wiederaufladbare Dual-Carbon-Batteriezellen und/oder Lithium-Polymer-Batteriezellen. Üblicherweise weist ein Batterie-Pack mehrere, in Reihe geschaltete wiederaufladbare Lithium-Batteriezellen auf. Das Batterie-Pack kann weitere Komponenten enthalten. Als weitere Komponente ist insbesondere ein Batterie-Management-System (BMS) enthalten. Das Batterie-Management-System ist vorzugsweise eine elektronische Schaltung, welche zur Überwachung, Regelung und zum Schutz der wiederaufladbaren Lithiumionen-Batteriezelle(n) dient. Batterie-Packs sind üblicherweise austauschbar gestaltet und verfügen über lösbare elektrische Kontakte.

Ein weiterer Gegenstand der vorliegenden Anmeldung ist ein Verfahren zur Herstellung eines erfindungsgemäßen Verbundkörpers. In dem erfindungsgemäßen Verfahren werden
(1) die einzelnen Schichten, wie vorstehend definiert, jeweils sukzessive bereitgestellt und
(2) jeweils über eine Klebstoffschicht gemäß vorstehender Spezifikation miteinander verklebt.
   In einem dritten Verfahrensschritt werden die laminierten Schichten
(3) unter Druckanwendung miteinander verbunden.
   Sollte im Rahmen der vorliegenden Erfindung die vorstehende erste Ausgestaltung einer Aluminiumfolie zur EMV-Abschirmung Anwendung finden, so umfasst das erfindungsgemäße Verfahren zusätzlich die folgenden Verfahrensschritte:
(4) gegebenenfalls Formgebung des aus dem Verfahrensschritt (3) resultierenden Aufbaus der Schichten, wobei die Schichten der Aluminiumfolien, welche die beiden äußeren Schichten des Aufbaus bilden, eine größere Fläche aufweisen als die übrigen innenliegenden Schichten; und
(5) Bördeln der beiden äußeren Aluminiumfolien unter vollständigem Einschluss der übrigen innenliegenden Schichten.

Ein weiterer Gegenstand der vorliegenden Anmeldung ist die Verwendung einer erfindungsgemäßen Brandschutzvorrichtung in einer Vorrichtung, umfassend mindestens eine wiederaufladbare Lithiumionen-Batteriezelle.

Bezüglich bevorzugter Ausführungsformen der Verwendung gilt *mutatis mutandis* das für die Brandschutzvorrichtung und das Batterie-Pack Gesagte.

Die vorliegende Erfindung wird anhand der nachfolgenden Ausführungsformen nochmals konkretisiert dargestellt:

### Ausführungsbeispiel:

Es wird ein erfindungsgemäßes Verbundsystem gemäß der Abbildung 1 hergestellt, in welcher die Bezugszeichen folgende Bedeutung aufweisen:
1: erste Schicht eines Brandschutzvlieses
2: VA-Edelstahlfolie
3: Silikatfasernadelmatte
4: zweite Schicht eines Brandschutzvlieses
5: Schicht aus einem Haftschmelzklebstoff

Die einzelnen Schichten werden der Reihe nach bereitgestellt und unter Verwendung eines Haftschmelzklebstoff auf Basis synthetischer Polymere der Firma Follmann (FOLCO^{®} MELT PSA H4402) jeweils mit der benachbarten Schicht verbunden. Die Schichten aus Haftschmelzklebstoff sind jeweils in der Abbildung 1 als diskrete Schichten dargestellt, können aber insbesondere beim Einpenetrieren in die Brandschutzvlies mit dieser Schicht verlaufen.

Die Abbildung 2 zeigt ein erfindungsgemäßes Verbundsystem, bei welchem des Verbundsystem gemäß Abbildung 1 auf der Ober- und Unterseite mit
6: einer ersten Aluminiumschicht und
7: einer zweiten Aluminiumschicht
   versehen ist. Die
8: Ränder der Aluminiumschicht
erstrecken sich über die Breite der Schichten 1 bis 5, so dass die beiden Aluminiumschichten durch Bördeln miteinander verbunden sind (nur schematisch in der Abbildung 2 dargestellt).

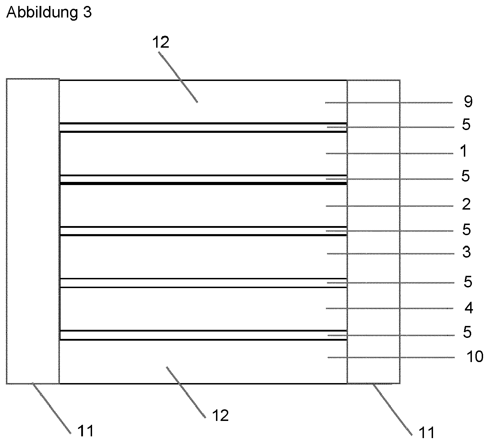

Die Abbildung 3 zweigt ein erfindungsgemäßes Verbundsystem, bei welchem des Verbundsystem gemäß Abbildung 1 auf der Ober- und Unterseite mit
9: einer ersten Kunststoffschicht und
10: einer zweiten Kunststoffschicht
   versehen ist. Die
11: Ränder der Kunststoffschicht
erstrecken sich über die Breite der Schichten 1 bis 5, so dass die beiden Kunststoffschichten, beispielsweise durch Spritzguss, miteinander verbunden sind (nur schematisch in der Abbildung 3 dargestellt).

In der ersten und zweiten Kunststoffschicht sind
12: mit Aluminium beschichtete Glasfasern eingebracht.

## Patentansprüche

1. Verbundsystem, umfassend
(a) mindestens eine Trägerschicht;
(b) mindestens eine als Brandschutzvlies ausgebildete Schicht; und
(c) mindestens einen Bestandteil zur Abschirmung elektrischer, magnetischer und/oder elektromagnetischer Strahlung,
**dadurch gekennzeichnet, dass**
der mindestens eine Bestandteil (c) entweder durch eine außerhalb der Schichten (a) und (b) angeordnete Aluminiumfolie und/oder durch mit Metall beschichtete Glas- oder Basaltfasern gebildet wird.

2. Verbundsystem nach Anspruch 1, **dadurch gekennzeichnet, dass** die mit mit Metall beschichtete Glas- oder Basaltfasern mit Aluminium beschichtet sind und mindestens einen der nachfolgenden Parameter aufweisen:
i) ein Filamentdurchmesser von 5 bis 24 µm;
ii) eine Dicke der Aluminiumbeschichtung von 0,1 bis 3 µm;
iii) eine Filamentfaserlänge von 1 bis 20 mm.

3. Verbundsystem nach Anspruch 1 oder 2, **dadurch gekennzeichnet, dass** die Trägerschicht gemäß (a) ausgewählt ist aus der Gruppe, bestehend aus einem Glasfaservlies oder Glasfasergewebe aus AES-Glas, E-Glas, ECR-Glas, Silika-Glas, S-Glas, R-Glas, M-Glas, C-Glas, D-Glas, AR-Glas, T-Glas und/oder Q-Glas.

4. Verbundsystem nach Anspruch 3, **dadurch gekennzeichnet, dass** die Trägerschicht gemäß (a) eine Silikatfasernadelmatte ist.

5. Verbundsystem nach einem der Ansprüche 1 bis 4, **dadurch gekennzeichnet, dass** die Trägerschicht gemäß (a) eine Silikatfasernadelmatte und eine Edelstahlfolie umfasst.

6. Verbundsystem nach Anspruch 5, **dadurch gekennzeichnet, dass** die Silikatfasernadelmatte und die Edelstahlfolie in dem Verbundkörper unmittelbar benachbart sind.

7. Verbundsystem nach einem der Ansprüche 1 bis 6, **dadurch gekennzeichnet, dass** das Brandschutzvlies gemäß (b) ein Glasfaservlies oder Glasfasergewebe umfasst.

8. Verbundsystem nach Anspruch 7, **dadurch gekennzeichnet, dass** das Glasfaservlies oder Glasfasergewebe gemäß (b) mit einer Brandschutzzusammensetzung beschichtet oder imprägniert ist.

9. Verbundsystem nach Anspruch 7 oder 8, **dadurch gekennzeichnet, dass** das Glasfaservlieses oder des Glasfasergewebes gemäß (b) mit einer Brandschutzzusammensetzung versehen ist, die als Bindemittel Harnstoffharze, modifizierten Polyvinylalkohol, Polyacrylsäure, Wassergläser, PU-Bindemittel und Mischungen der vorgenannten Bindemittel und mindestens eine ablativ-wirkende Verbindung enthält, wobei die ablativ-wirkende Verbindung unter Einwirkung von Hitze keramisierend, verkohlend, sublimierend oder aufblähbar ist.

10. Verbundsystem nach einem der Ansprüche 1 bis 9, **dadurch gekennzeichnet, dass** das Verbundsystem mindestens eine Folie aus Aluminium als Bestandteil zur Abschirmung elektrischer, magnetischer und/oder elektromagnetischer Strahlung gemäß (c) umfasst.

11. Verbundsystem nach einem der Ansprüche 1 bis 10, **dadurch gekennzeichnet, dass** das Verbundsystem folgenden Schichtaufbau aufweist:
a) Aluminiumfolie, benachbart zu
b) einer als Brandschutzvlies ausgebildeten Schicht, benachbart zu
c) Trägerschicht, benachbart zu
d) einer als Brandschutzvlies ausgebildeten Schicht, benachbart zu
e) Aluminiumfolie.

12. Verbundsystem nach einem der Ansprüche 1 bis 8, **dadurch gekennzeichnet, dass** das Verbundsystem mit Aluminium beschichtete Glas- oder Basaltfasern oder Fasern aus Glas oder Basalt sind, die mit einer Aluminiumbeschichtung ummantelt sind, als Bestandteil zur Abschirmung elektrischer, magnetischer und/oder elektromagnetischer Strahlung umfasst.

13. Verbundsystem nach Anspruch 12, **dadurch gekennzeichnet, dass** die mit Aluminium beschichteten Glas- oder Basaltfasern oder die Fasern aus Glas oder Basalt, die mit einer Aluminiumbeschichtung ummantelt sind, in eine Kunststoffschicht eingebracht vorliegen.

14. Verfahren zur Herstellung eines Verbundsystems gemäß einem der Ansprüche 1 bis 13, **dadurch gekennzeichnet, dass** die einzelnen Schichten bereitgestellt werden und mittels eines Hot-Melt-Klebstoffes und unter Einwirkung von Druck miteinander verbunden werden.

15. Verwendung eines Verbundsystem gemäß einem der Ansprüche 1 bis 13 zum Brandschutz von Batterien, insbesondere zum Brandschutz von Automobilbatterien.
